# EUROPEAN PATENT SPECIFICATION

(11) **EP 2 252 654 B1**
(45) Date of publication and mention of the grant of the patent: **07.09.2011**
(21) Application number: 09721124.7
(22) Date of filing: 23.02.2009
(51) Int. Cl.: C08L 23/14, C08F 210/08, C08F 210/14, C08F 210/16, C08L 23/22

(54) **1-BUTENE TERPOLYMERS**
1-BUTENTERPOLYMER
TERPOLYMÈRES DE 1-BUTÈNE

(30) Priority: 13.03.2008 EP 08152714; 17.03.2008 US 69851
(43) Date of publication of application: 24.11.2010
(73) Proprietor: Basell Poliolefine Italia S.r.l., 20127 Milano (IT)
(72) Inventor: SPATARO, Stefano, I-44100 Ferrara (IT); PELLEGATTI, Giampaolo, I-44030 Boara (Fe) (IT); CAPUTO, Tiziana, I-44100 Ferrara (IT)
(74) Representative: Sacco, Marco
(86) International application number: PCT/EP2009/052102
(87) International publication number: WO 2009/112351

(56) References cited:
- EP-A- 0 302 297
- EP-A- 1 308 466
- WO-A-2004/048424
- US-A- 4 309 522
- US-A1- 2004 096 682

## Description

The present invention relates to 1-butene/propylene/ethylene terpolymers having an optimum balance of features in particular they can be advantageously used as components for lowering the seal ignition temperature (SIT) of polymers. Said terpolymer being obtained by using a particular class of metallocene-based catalyst system.

Butene-1 based polymers are well known in the art and have a wide range of applicability. In particular, butene-1 copolymers with a low content of comonomer (1-3%by mol) are generally characterized by good properties in terms of pressure resistance, creep resistance, impact strength.

WO 04/048424 relates to a 1-butene copolymer containing up to 40% by mol of ethylene or propylene derived units. These copolymers are obtained by using titanium based catalyst, therefore they are endowed with a broad molecular weight distribution typical of this class of catalyst system.

WO 04/099269 relates to 1-butene/ethylene polymer wherein the content of ethylene derived units ranges from 0.2 to 15% by mol. However this document is silent about the possibility to produces terpolymer having a very lo sealing ignition temperature (SIT).

The applicant found that by introducing in a 1-butene/propylene polymers a small amount of ethylene it is possible to achieve a polymer having among other advantageous properties the possibility to be used as component for lowering the sealing ignition temperature (SIT) in other polymers.

An object of the present invention is a 1-butene propylene ethylene terpolymer having a content of propylene derived units ranging from 0.1-10 % by weight preferably from 4 to 8 % by weight and an ethylene derived units content ranging from 0.1 to 3 % by weight preferably from 0.5 to 1.5 % by weight having the following properties:
a) distribution of molecular weight Mw/Mn measured by GPC lower than 3.5, preferably lower than 3;
b) melting point (DSC) comprised between 60°C and 105°C, preferably comprised between 65°C and 96°C; more preferably comprised between 65°C and 90°C;
c) content of 1-butene units in the form of isotactic pentads (mmmm) measured by NMR comprised between 90% and 96%; preferably comprised between 91 % and 95%; even more preferably comprised between 92% and 94%.
The terpolymer of the present invention is further endowed with the property that when blended with 90% of a propylene resin (10% of the terpolymer), the seal initiation temperature (SIT) of the resulting blend is at least 10°C, preferably at least 20°C, more
preferably 30°C lower than the seal initiation temperature (SIT) of the propylene resin alone. Preferably the propylene resin is a propylene composition comprising
i) from 15% to 60% by weight, preferably from 20% to 60% by weight, more preferably from 20% to 50% by weight, of a copolymer of propylene with C₄-C₈ alpha-olefin(s) derived units, preferably 1-butene derived units, containing more than 5% by weight preferably more than 10% by weight of said C₄-C₈ alpha-olefin(s); more preferably the content of said C₄-C₈ alpha-olefin(s) is comprised between 11% and 14%; even more preferably comprised between 13% and 13.5% by weight;
ii) from 40% to 85% by weight, preferably from 40% to 80% by weight, more preferably from 50% to 80% by weight, of a copolymer of propylene with C₄-C₈ alpha-olefin(s), preferably 1-butene, containing from 10% to 30% by weight, preferably from 14% to 25% by weight, more preferably from 14.5% to 22% by weight, of said C₄-C₈ alpha-olefin(s), and optionally from 0.5% to 3% of ethylene; provided that the total content of C₄-C₈ alpha-olefin(s) in the propylene polymer composition be higher than 10% by weight.

Preferably the 1-butene/propylene/ethylene terpolymer object of the present invention is endowed with a molecular weigh Mw measured by GPC according to the procedure reported in the examples comprised between 100000 and 350000, more preferably Mw is comprised between 200000 and 310000, even ore preferably Mw is comprised between 250000 and 300000. If the molecular weight is too high the polymer is difficult to process. When the polymer has a too low molecular weight it becomes sticky.

The 1-butene/propylene/ethylene terpolymer object of the present invention presents a good balance between hardeness and elastic behavior if compared with the correspondent 1-butene/propyolene copolymer. i.e. a 1-butene polymer having the same content of comonomer but without the presence of ethylene derived units.

The 1-butene/propylene/ethylene terpolymer object of the present invention can be advantageously used either alone or in a composition with other polymers for films, i.e. blow, cast or bi-oriented film, sheets, and easy injection molding. In particular when the terpolymer object of the present invention is used for injection molding it presents a high degree of unmoldability.

The fact that a small amount of the terpolymer of the present invention can be used to lower the SIT of a propylene resin has the advantage to improve this feature without worsening other mechanical features of the propylene resins.

Thus a further object of the present invention is a propylene composition comprising:
a) from 1% to 15%, preferably from 5 to 12% by weight of the terpolymer of the present invention;
b) from 99% to 75% preferably from 95 to 78% by weight of a propylene polymer comprising:
   b1) from 15% to 60% by weigh, preferably from 20% to 60% by weigh, more preferably from 20% to 50% by weigh, of a copolymer of propylene with C₄-C₈ alphaolefin(s) derived units, preferably 1-butene derived units, containing more than 5% by weight preferably more than 10% by weigh of said C₄-C₈ alpha-olefin(s); more preferably the content of said C₄-C₈ alpha-olefin(s) is comprised between 11 % and 14%; even more preferably comprised between 13% and 13.5% by weight;
   b2) from 40% to 85% by weigh, preferably from 40% to 80% by weigh, more preferably from 50% to 80% by weigh, of a copolymer of propylene with C₄-C₈ alpha-olefin(s), preferably 1-butene, containing from 10% to 30% by weigh, preferably from 14% to 25% by weigh, more preferably from 14.5% to 22% by weigh, of said C₄-C₈ alpha-olefin(s), and optionally from 0.5% to 3% of ethylene;
   provided that the total content of C₄-C₈ alpha-olefin(s) in the propylene polymer composition be higher than 10% by weigh.

Preferably the total content of C₄-C₈ alpha-olefin(s) in the propylene polymer composition is equal to or greater than 13% by weigh, more preferably greater than 14% by weigh, and even more preferably comprised between 20% to 25% by weigh.

Preferably the copolymer b) is free from ethylene.

Preferably the Melt Flow Rate (MFR L) values of component b) of the composition of the present invention range from 2 to 15 g/10 min., more preferably from 2.5 to 10 g/10 min. The melting temperature of component b) of said composition is preferably from 120 to 140°C. Component b) can be obtained for example according to WO 03/031514.

The propylene composition of the present invention can be advantageously used for films, i.e. blow, cast or bi-oriented film, sheets, and easy injection molding. In particular it can be used for packaging film in view of the low SIT.

The 1-butene/propylene/ethylene copolymer object of the present invention can be obtained by contacting under polymerization conditions 1-butene, propylene and ethylene in the presence of a catalyst system obtainable by contacting:
(A) a stereorigid metallocene compound;
(B) an alumoxane or a compound capable of forming an alkyl metallocene cation; and optionally
(C) an organo aluminum compound.

Preferably the stereorigid metallocene compound belongs to the following formula (I): 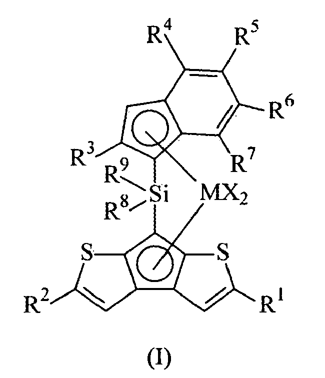 wherein:
M is an atom of a transition metal selected from those belonging to group 4; preferably M is zirconium;
X, equal to or different from each other, is a hydrogen atom, a halogen atom, a R, OR, OSO₂CF₃, OCOR, SR, NR₂ or PR₂ group wherein R is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical, optionally containing heteroatoms belonging to groups 13-17 of the Periodic Table of the Elements; or two X can be joined together to form a OR'O group wherein R' is a C₁-C₂₀-alkylidene, C₆-C₂₀-arylidene, C₇-C₂₀-alkylarylidene, or C₇-C₂₀-arylalkylidene radical; preferably X is a hydrogen atom, a halogen atom, a OR'O or R group; more preferably X is chlorine or a methyl radical;
R¹, R², R⁵, R⁶, R⁷, R⁸ and R⁹, equal to or different from each other, are hydrogen atoms, or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; or R⁵ and R⁶, and/or R⁸ and R⁹ can optionally form a saturated or unsaturated, 5 or 6 membered rings, said ring can bear C₁-C₂₀ alkyl radicals as substituents; with the proviso that at least one of R⁶ or R⁷ is a linear or branched, saturated or unsaturated C₁-C₂₀-alkyl radical, optionally containing heteroatoms belonging to groups 13-17 of the Periodic Table of the Elements; preferably a C₁-C₁₀-alkyl radical;
preferably R¹, R², are the same and are C₁-C₁₀ alkyl radicals optionally containing one or more silicon atoms; more preferably R¹ and R² are methyl radicals;
R⁸ and R⁹, equal to or different from each other, are preferably C₁-C₁₀ alkyl or C₆-C₂₀ aryl radicals; more preferably they are methyl radicals;
R⁵ is preferably a hydrogen atom or a methyl radical; or can be joined with R⁶ to form a saturated or unsaturated, 5 or 6 membered rings, said ring can bear C₁-C₂₀ alkyl radicals as substituents;
R⁶ is preferably a hydrogen atom or a methyl, ethyl or isopropyl radical; or it can be joined with R⁵ to form a saturated or unsaturated, 5 or 6 membered rings as described above;
R⁷ is preferably a linear or branched, saturated or unsaturated C₁-C₂₀-alkyl radical, optionally containing heteroatoms belonging to groups 13-17 of the Periodic Table of the Elements; preferably a C₁-C₁₀-alkyl radical; more preferably R⁷ is a methyl or ethyl radical; otherwise when R⁶ is different from a hydrogen atom, R⁷ is preferably a hydrogen atom
R³ and R⁴, equal to or different from each other, are linear or branched, saturated or unsaturated C₁-C₂₀-alkyl radicals, optionally containing heteroatoms belonging to groups 13-17 of the Periodic Table of the Elements; preferably R³ and R⁴ equal to or different from each other are C₁-C₁₀-alkyl radicals; more preferably R³ is a methyl, or ethyl radical; and R⁴ is a methyl, ethyl or isopropyl radical;
   (A) an alumoxane or a compound capable of forming an alkyl metallocene cation; and optionally
   (B) an organo aluminum compound.

Preferably the compounds of formula (I) have formula (Ia) or (Ib): 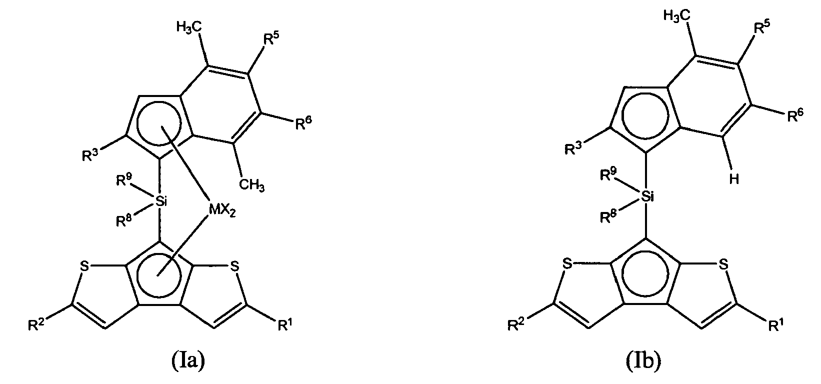 Wherein
M, X, R¹, R², R⁵, R⁶, R⁸ and R⁹ have been described above;
R³ is a linear or branched, saturated or unsaturated C₁-C₂₀-alkyl radical, optionally containing heteroatoms belonging to groups 13-17 of the Periodic Table of the Elements; preferably R³ is a C₁-C₁₀-alkyl radical; more preferably R³ is a methyl, or ethyl radical.

Alumoxanes used as component B) can be obtained by reacting water with an organo-aluminium compound of formula HⱼAlU₃₋ⱼ or HⱼAl₂U₆₋ⱼ, where U substituents, same or different, are hydrogen atoms, halogen atoms, C₁-C₂₀-alkyl, C₃-C₂₀-cyclalkyl, C₆-C₂₀-aryl, C₇-C₂₀-akylaryl or or C7-C20-arylalkyl radical, optionally containing silicon or germanium atoms with the proviso that at least one U is different from halogen, and j ranges from 0 to 1, being also a non-integer number. In this reaction the molar ratio of Al/water is preferably comprised between 1:1 and 100: 1. The molar ratio between aluminium and the metal of the metallocene generally is comprised between 10:1 and 20000:1, and more preferably between 100.1 and 5000:1. The alumoxanes used in the catalyst according to the invention are considered to be linear, branched or cyclic compounds containing at least one group of the type: 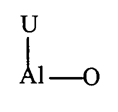 wherein the substituents U, same or different, are described above.

In particular, alumoxanes of the formula: 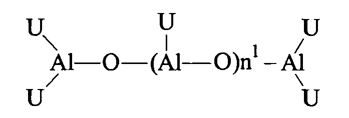 can be used in the case of linear compounds, wherein n¹ is 0 or an integer from 1 to 40 and the substituents U are defined as above, or alumoxanes of the formula: 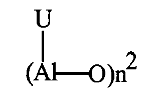 can be used in the case of cyclic compounds, wherein n² is an integer from 2 to 40 and the U substituents are defined as above. Examples of alumoxanes suitable for use according to the present invention are methylalumoxane (MAO), tetra-(isobutyl)alumoxane (TIBAO), tetra-(2,4,4-trimethyl-pentyl)alumoxane (TIOAO), tetra-(2,3-dimethylbutyl)alumoxane (TDMBAO) and tetra-(2,3,3-trimethylbutyl)alumoxane (TTMBAO). Particularly interesting cocatalysts are those described in WO 99/21899 and in WO01/21674 in which the alkyl and aryl groups have specific branched patterns. Non-limiting examples of aluminium compounds according to WO 99/21899 and WO01/21674 are:
tris(2,3,3-trimethyl-butyl)aluminium, tris(2,3-dimethyl-hexyl)aluminium, tris(2,3-dimethylbutyl)aluminium, tris(2,3-dimethyl-pentyl)aluminium, tris(2,3-dimethyl-heptyl)aluminium, tris(2-methyl-3-ethyl-pentyl)aluminium, tris(2-methyl-3-ethyl-hexyl)aluminium, tris(2-methyl-3-ethyl-heptyl)aluminium, tris(2-methyl-3-propyl-hexyl)aluminium, tris(2-ethyl-3-methylbutyl)aluminium, tris(2-ethyl-3-methyl-pentyl)aluminium, tris(2,3-diethyl-pentyl)aluminium, tris(2-propyl-3-methyl-butyl)aluminium, tris(2-isopropyl-3-methyl-butyl)aluminium, tris(2-isobutyl-3-methyl-pentyl)aluminium, tris(2,3,3-trimethyl-pentyl)aluminium, tris(2,3,3-trimethyl-hexyl)aluminium, tris(2-ethyl-3,3-dimethyl-butyl)aluminium, tris(2-ethyl-3,3-dimethylpentyl)aluminium, tris(2-isopropyl-3,3-dimethyl-butyl)aluminium, tris(2-trimethylsilyl-propyl)aluminium, tris(2-methyl-3-phenyl-butyl)aluminium, tris(2-ethyl-3-phenyl-butyl)aluminium, tris(2,3-dimethyl-3-phenyl-butyl)aluminium, tris(2-phenyl-propyl)aluminium, tris[2-(4-fluorophenyl)-propyl]aluminium, tris[2-(4-chloro-phenyl)-propyl]aluminium, tris[2-(3-isopropyl-phenyl)-propyl]aluminium, tris(2-phenyl-butyl)aluminium, tris(3-methyl-2-phenyl-butyl)aluminium, tris(2-phenyl-pentyl)aluminium, tris[2-(pentafluorophenyl)-propyl]aluminium, tris[2,2-diphenylethyl]aluminium and tris[2-phenyl-2-methyl-propyl]aluminium, as well as the corresponding compounds wherein one of the hydrocarbyl groups is replaced with a hydrogen atom, and those wherein one or two of the hydrocarbyl groups are replaced with an isobutyl group.

Amongst the above aluminium compounds, trimethylaluminium (TMA), triisobutylaluminium (TIBAL), tris(2,4,4-trimethyl-pentyl)aluminium (TIOA), tris(2,3-dimethylbutyl)aluminium (TDMBA) and tris(2,3,3-trimethylbutyl)aluminium (TTMBA) are preferred.

Non-limiting examples of compounds able to form an alkylmetallocene cation are compounds of formula D⁺E⁻, wherein D⁺ is a Brønsted acid, able to donate a proton and to react irreversibly with a substituent X of the metallocene of formula (I) and E⁻ is a compatible anion, which is able to stabilize the active catalytic species originating from the reaction of the two compounds, and which is sufficiently labile to be able to be removed by an olefinic monomer. Preferably, the anion E-comprises of one or more boron atoms. More preferably, the anion E⁻ is an anion of the formula BAr₄⁽⁻⁾, wherein the substituents Ar which can be identical or different are aryl radicals such as phenyl, pentafluorophenyl or bis(trifluoromethyl)phenyl. Tetrakis-pentafluorophenyl borate is particularly preferred examples of these compounds are described in WO 91/02012. Moreover, compounds of the formula BAr₃ can conveniently be used. Compounds of this type are described, for example, in the published International patent application WO 92/00333. Other examples of compounds able to form an alkylmetallocene cation are compounds of formula BAr₃P wherein P is a substituted or unsubstituted pyrrol radicals.. These compounds are described in WO01/62764. Other examples of cocatalyst can be found in EP 775707 and DE 19917985. Compounds containing boron atoms can be conveniently supported according to the description of DE-A-19962814 and DE-A-19962910. All these compounds containing boron atoms can be used in a molar ratio between boron and the metal of the metallocene comprised between 1:1 and 10:1; preferably 1:1 and 2.1; more preferably 1:1.

Non limiting examples of compounds of formula D⁺E⁻ are:
Triethylammoniumtetra(phenyl)borate,
Trimethylammoniumtetra(tolyl)borate,
Tributylammoniumtetra(tolyl)borate,
Tributylammoniumtetra(pentafluorophenyl)borate,
Tripropylammoniumtetra(dimethylphenyl)borate,
Tributylammoniumtetra(trifluoromethylphenyl)borate,
Tributylammoniumtetra(4-fluorophenyl)borate,
N,N-Dimethylaniliniumtetra(phenyl)borate,
N,N-Dimethylaniliniumtetrakis(pentafluorophenyl)boratee,
Di(propyl)ammoniumtetrakis(pentafluorophenyl)borate,
Di(cyclohexyl)ammoniumtetrakis(pentaffuorophenyl)borate,
Triphenylphosphoniumtetrakis(phenyl)borate,
Tri(methylphenyl)phosphoniumtetrakis(phenyl)borate,
Tri(dimethylphenyl)phosphoniumtetrakis(phenyl)borate,
Triphenylcarbeniumtetrakis(pentafluorophenyl)borate,
Triphenylcarbeniumtetrakis(phenyl)aluminate,
Ferroceniumtetrakis(pentafluorophenyl)borate,
N,N-Dimethylaniliniumtetrakis(pentafluorophenyl)borate.

Organic aluminum compounds used as compound C) are those of formula HⱼAlU₃₋ⱼ or HjAl₂U₆₋ⱼ described above. The catalysts of the present invention can also be supported on an inert carrier. This is achieved by depositing the metallocene compound A) or the product of the reaction thereof with the component B), or the component B) and then the metallocene compound A) on an inert support such as, for example, silica, alumina, Al-Si, Al-Mg mixed oxides, magnesium halides, styrene/divinylbenzene copolymers, polyethylene or polypropylene. The supportation process is carried out in an inert solvent such as hydrocarbon for example toluene, hexane, pentane or propane and at a temperature ranging from 0°C to 100°C, preferably the process is carried out at a temperature ranging from 25°C to 90°C or the process is carried out at room temperature.

A suitable class of supports which can be used is that constituted by porous organic supports functionalized with groups having active hydrogen atoms. Particularly suitable are those in which the organic support is a partially crosslinked styrene polymer. Supports of this type are described in European application EP-633272. Another class of inert supports particularly suitable for use according to the invention is that of polyolefin porous prepolymers, particularly polyethylene.

A further suitable class of inert supports for use according to the invention is that of porous magnesium halides such as those described in International application WO 95/32995.
the process for the polymerization of 1-butene and ethylene according to the invention can be carried out in the liquid phase in the presence or absence of an inert hydrocarbon solvent, such as in slurry, or in the gas phase. The hydrocarbon solvent can either be aromatic such as toluene, or aliphatic such as propane, hexane, heptane, isobutane or cyclohexane. Preferably the copolymers of the present invention are obtained by a solution process, i.e. a process carried out in liquid phase wherein the polymer is completely or partially soluble in the reaction medium

As a general rule, the polymerization temperature is generally comprised between -100°C and +200°C preferably comprised between 40° and 90°C, more preferably between 50°C and 80°C. The polymerization pressure is generally comprised between 0,5 and 100 bar.

The lower the polymerization temperature, the higher are the resulting molecular weights of the polymers obtained.

The melting points of the polymers (TmII) were measured by Differential Scanning Calorimetry (D.S.C.) on an Perkin Elmer DSC-7 instrument, according to the following method.

A weighted sample (5-10 mg) obtained from the polymerization was sealed into aluminum pans and heated at 200°C with a scanning speed corresponding to 20°C/minute. The sample was kept at 200°C for 5 minutes to allow a complete melting of all the crystallites. Successively, after cooling to-20°C with a scanning speed corresponding to 10°C/minute, the peak temperature was taken as crystallization temperature (T_{c}). After standing 5 minutes at -20°C, the sample was heated for the second time at 200°C with a scanning speed corresponding to 10°C/min. In this second heating run, the peak temperature was taken as the melting temperature (TmII) and the area as global melting enthalpy (ΔH_{f}).

The Seal Initiation Temperature (S.I.T.) has been measured as follows:
Sample of the terpolymers prepared according to the present invention have been blended with a propylene resin obtained as described in example 4 of WO 03/031514. The resulting blend contains 10% by weight of the terpolymer of the present invention and 90% by weight of the propylene resin. Some films with a thickness of 50 µm are prepared each by extruding the resulting blend in a single screw Collin extruder (length/diameter ratio of screw: 25) at a film drawing speed of 7 m/min. and a melt temperature of 210-250 °C. Each resulting film is superimposed on a 1000 µm thick film of a propylene homopolymer having an isotacticity index of 97 and a MFR L of 2 g/10 min. The superimposed films are bonded to each other in a Carver press at 200 °C under a 9000 kg load, which is maintained for 5 minutes.

The resulting laminates are stretched longitudinally and transversally, i.e. biaxially, by a factor 6 with a TM Long film stretcher at 150 °C, thus obtaining a 20 µm thick film (18 µm homopolymer + 2 µm test composition). 2 x 5 cm specimens are cut from the films. For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 0.5 seconds at a pressure of 0.1 N/mm2. The sealing temperature is increased of 4°C for each seal, starting from about 10 °C less than the melting temperature of the test composition. The sealed samples are left to cool and then their unsealed ends are attached to an Instron machine where they are tested at a traction speed of 50 mm/min. The S.I.T. is the minimum sealing temperature at which the seal does not break when a load of at least 2 Newtons is applied in the said test conditions.

The following examples are for illustrative purpose and do not intend to limit the scope of the invention.

### Examples

### Melting point

The melting points of the polymers (TmII) were measured by Differential Scanning Calorimetry (D.S.C.) on an Perkin Elmer DSC-7 instrument, according to the following method.

A weighted sample (5-10 mg) obtained from the polymerization was sealed into aluminum pans and heated at 200°C with a scanning speed corresponding to 20°C/minute. The sample was kept at 200°C for 5 minutes to allow a complete melting of all the crystallites. Successively, after cooling to-20°C with a scanning speed corresponding to 10°C/minute, the peak temperature was taken as crystallization temperature (T_{c}). After standing 5 minutes at -20°C, the sample was heated for the second time at 200°C with a scanning speed corresponding to 10°C/min. In this second heating run, the peak temperature was taken as the melting temperature (TmII) and the area as global melting enthalpy (ΔH_{f}).
**¹³C-NMR**
¹³C-NMR spectra were acquired on a DPX-400 spectrometer operating at 100.61 MHz in the Fourier transform mode at 120 °C. The peak of the 2B₂ carbon (nomenclature according to Carman, C. J.; Harrington, R. A.; Wilkes, C. E. Macromolecules 1977, 10, 535) was used as internal reference at 27.73. The samples were dissolved in 1,1,2,2-tetrachloroethane-*d*2 at 120 °C with a 8% wt/v concentration. Each spectrum was acquired with a 90° pulse, 15 seconds of delay between pulses and CPD (waltz16) to remove 1H-13C coupling. About 3000 transients were stored in 32K data points using a spectral window of 6000 Hz. Assignments of 4,1 insertion were made according to Busico (V. Busico, R. Cipullo, A. Borriello, Macromol. Rapid. Commun. 1995, 16, 269-274)

### Mw and Mw/Mn determination by Gel Permeation Chromatography (GPC)

MWD curves are determined using a Waters 150-C ALC/GPC system equipped with a Infrared detector IR4 POLIMERCHAR and with a TSK column set (type GMHXL-HT) working at 135°C with 1,2,4-trichlorobenzene as solvent (TCB) (stabilized with 0.1 vol. of 2, 6-di-t-butyl p-cresole (BHT) ) at flow rate of 1 ml/min. The sample is dissolved in TCB by stirring continuously at a temperature of 140°C for 1 hour.

The solution is filtered through a 0.45 µm Teflon membrane. The filtrate (concentration 0.08- 1.2g/l injection volume 300 µl) is subjected to GPC. Monodisperse fractions of polystyrene (provided by Polymer Laboratories) were used as standard. The universal calibration for PB copolymers was performed by using a linear combination of the Mark- Houwink constants for PS (K=1.21x10-4dl/g; α=0.706) and PB(K=1.78x10-4dl/g; α =0.725), PE (K=4.06x10-4d1/g; α=0.725), PP (K=1.90x10-4dl/g; α=0.725) weighted for the comonomer content in the terpolymer.

Data Acquisition and processing was performed with the software Water Empower v.1.

### Seal Initiation Temperature (S.I.T.)

Sample of the terpolymers have been blended with a propylene resin obtained as described in example 4 of WO 03/031514. The resulting blend contains 90% by weight of the propylene resin and 10% by weight of the terpolymer of the present invention. The resulting blend has been used for the preparation of test films as described below.

### Preparation of the film specimens

Some films with a thickness of 50 µm are prepared by extruding each test composition in a single screw Collin extruder (length/diameter ratio of screw: 25) at a film drawing speed of 7 m/min. and a melt temperature of 210-250 °C. Each resulting film is superimposed on a 1000 µm thick film of a propylene homopolymer having an isotacticity index of 97 and a MFR L of 2 g/10 min. The superimposed films are bonded to each other in a Carver press at 200 °C under a 9000 kg load, which is maintained for 5 minutes.

The resulting laminates are stretched longitudinally and transversally, i.e. biaxially, by a factor 6 with a TM Long film stretcher at 150 °C, thus obtaining a 20 µm thick film (18 µm homopolymer + 2 µm test composition).
2 x 5 cm specimens are cut from the films.

### Determination of the S.I.T.

For each test two of the above specimens are superimposed in alignment, the adjacent layers being layers of the particular test composition. The superimposed specimens are sealed along one of the 2 cm sides with a Brugger Feinmechanik Sealer, model HSG-ETK 745. Sealing time is 0.5 seconds at a pressure of 0.1 N/mm². The sealing temperature is increased of 4°C for each seal, starting from about 10 °C less than the melting temperature of the test composition. The sealed samples are left to cool and then their unsealed ends are attached to an Instron machine where they are tested at a traction speed of 50 mm/min..

The S.I.T. is the minimum sealing temperature at which the seal does not break when a load of at least 2 Newtons is applied in the said test conditions.

### Metallocene compounds

Dimethylsilanediyl {(1-(2,4,7-trimethylindenyl)-7-(2,5-dimethyl-cyclopenta[1,2-b:4,3-b']-dithiophene)} Zirconium dichloride (A1) was prepared according to WO 01/47939.

### Catalyst system C-1

A 101 g/L solution of TIBA in isododecane was mixed a 30% wt/wt toluene solution of Methylalumoxane (MAO) in order to reach MAO/TIBA, molar ratio 2:1. To this solution was then added to of A-1. The resulting catalytic solution contains 3.45% wt of A-1 and 25.2% wt of Al.

### Example 1

The polymerization was carried out in a pilot plant comprising two stirred reactors connected in series in which liquid butene-1, propylene and ethylene constituted the liquid medium. The catalyst system C-1 was injected into the reactor at a feed rate of 6.48 g/h and the polymerization was carried out in continuous at a polymerization temperature of 70°C, while hydrogen, 1-butene, propylene and ethylene were feed according to the data reported on table 1. The pressure of the two reactors was kept constant at 24 bar-g. The 1-butene polymer was recovered as melt from the solution and cut in pellets. The polymerization conditions are reported in table 1.

### Comparative example 2

The run of example 1 has been repeated without using ethylene. The polymerization conditions are reported in table 1.

**Table 1**

| example | 1 | | 2 | |
|---|---|---|---|---|
| | Firs react. | Sec react | Firs react. | Sec react |
| Residence time (min) | 110.0 | 90 | 104.3 | 82.4 |
| C4-feed (kg/h) | 110 | 25 | 116 | 30 |
| C3-feed (kg/h) | 2.67 | 0 | 2.55 | 0 |
| C2-feed (kg/h) | 0.500 | 0 | 0 | 0 |
| Yield kg/g | 0.500 | 0 | 0.470 | 0 |
| Solution density kg/m³ | 576 | 574 | 576 | 573 |
| Polymer concentration wt% | 24 | 23 | 24 | 22 |
| Spit between the two | | | | |
| reactors | 85 | 15 | 86.7 | 13.3 |
| Yield (polymer/cat feed) | - | 4300 | - | 4167 |

| | | | | |
|---|---|---|---|---|
| C4= 1-butene C3= propylene C2= ethylene | | | | |

### Preparation of the propylene resin of example 4 of WO 03/031514.

The propylene resin described in example 4 of WO 03/031514 has been prepared. The composition of the resin is the following:

| | Component b1) | Component b2) (second and third reactors) | b1)+b2) |
|---|---|---|---|
| Split % | 25 | 75% | |
| 1-butene derived units content % by weigh | 12 | 16 | 15 |
| Ethylene derived units content % by weigh | 0 | 1.07 | 0.8 |
| MNRLg/10 min | 2.9 | nm | 4.3 |
| Melting point °C | nm | nm | 127 |
| S.LT. °C* | - | - | 93 |

| | | | |
|---|---|---|---|
| *measured on the component alone without the terpolymer of the present invention nm=not measured | | | |

Samples of polymers of examples 1 and comparative example 2 were analyzed after about 10 days of annealing. The results are reported on table 2.

**Table 2**

| Ex | 1 | 2 |
|---|---|---|
| C3 (wt%) | 5.3 | 6.2 |
| C2 (wt%) | 1.1 | 0 |
| Mw | 284000 | 288000 |
| Mw/Mn | 2.7 | 2.6 |
| Melting point (TmII) °C | 67.5 | 102.0 |
| Seal initiation temperature S.I.T.*°C | 66-70 | 76-80 |
| 1 butene pentads (mmmm) % | 93 | 94 |

| | | |
|---|---|---|
| * measured as blend of 10% ot the terpolymer and 902% of the polymer prepared accondn g to ex 4 of WO 03/031514 | | |

The SIT of the polymer prepared according to example 4 of WO 03/031514 results to be of 93°C, thus the terpolymer of the present invention is able to lower the SIT of the resulting blend of about 30°C.

## Claims

1. A 1-butene propylene ethylene terpolymer having a content of propylene derived units ranging from 0.1-10 % by weight and an ethylene derived units content ranging from 0.1 to 3 % by weight having the following properties:
a) distribution of molecular weight Mw/Mn measured by GPC lower than 3.5;
b) melting point (DSC) comprised between 60°C and 105°C;
c) content of 1-butene units in the form of isotactic pentads (mmmm) measured by NMR comprised between 90% and 96%.

2. The 1-butene propylene ethylene terpolymer according to claim 1 wherein when blended with 90% of a propylene resin, the seal initiation temperature (SIT) of the resulting blend is at least 10°C lower than the seal initiation temperature (SIT) of the propylene resin alone.

3. The 1-butene propylene ethylene terpolymer according to claim 2 wherein the seal initiation temperature (SIT) of the resulting blend is at least 20°C lower than the seal initiation temperature (SIT) of the propylene resin alone.

4. The 1-butene propylene ethylene terpolymer according to anyone of claims 1-2, wherein when blended with 90% of a propylene resin, the seal initiation temperature (SIT) of the resulting blend is at least 10°C lower than the seal initiation temperature (SIT) of the propylene resin wherein said propylene resin is a propylene composition comprising:
i) from 15% to 60% by weigh, of a copolymer of propylene with C₄-C₈ alphaolefin(s) derived units, containing more than 5% by weight of said C₄-C₈ alphaolefin(s) derived units;
ii) from 40% to 85% by weigh, of a copolymer of propylene with C₄-C₈ alphaolefin(s), containing from 10% to 30% by weigh of said C₄-C₈ alpha-olefin(s) derived units, and optionally from 0.5% to 3% by weight of ethylene; provided that the total content of C₄-C₈ alpha-olefin(s) in the propylene polymer composition be higher than 10% by weigh.

5. The 1-butene propylene ethylene terpolymer according anyone of claims 1-4 wherein the melting point (measured by DSC) is comprised between 65°C and 96°C.

6. The 1-butene propylene ethylene terpolymer according to anyone of claims 1-5 wherein the content of propylene derived units ranges from 4 to 8 % by weight.

7. The 1-butene propylene ethylene terpolymer according to anyone of claims 1-6 wherein the content of ethylene derived units ranges from 0.5 to 1.5 % by weight.

8. A process for preparing the 1-butene propylene ethylene terpolymer of claims 1-7 wherein 1-butene, propylene and ethylene are contacted under polymerization conditions in the presence of a catalyst system obtainable by contacting:
(A) a stereorigid metallocene compound;
(B) an alumoxane or a compound capable of forming an alkyl metallocene cation; and optionally
(C) an organo aluminum compound.
wherein the stereorigid metallocene compound belongs to formula (I) 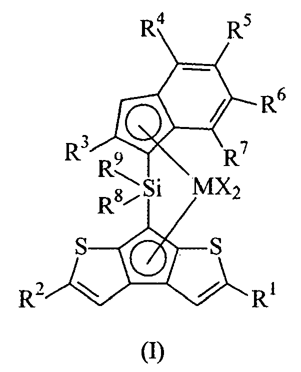 wherein:
M is an atom of a transition metal selected from those belonging to group 4 of the periodic table;
X, equal to or different from each other, is a hydrogen atom, a halogen atom, a R, OR, OSO₂CF₃ OCOR, SR, NR₂ or PR₂ group wherein R is a linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radical, optionally containing heteroatoms belonging to groups 13-17 of the Periodic Table of the Elements; or two X can be joined together to form a OR'O group wherein R' is a C₁-C₂₀-alkylidene, C₆-C₂₀-arylidene, C₇-C₂₀-alkylarylidene, or C₇-C₂₀-arylalkylidene radical;
R¹, R², R⁵, R⁶, R⁷, R⁸ and R⁹, equal to or different from each other, are hydrogen atoms, or linear or branched, saturated or unsaturated C₁-C₂₀-alkyl, C₃-C₂₀-cycloalkyl, C₆-C₂₀-aryl, C₇-C₂₀-alkylaryl or C₇-C₂₀-arylalkyl radicals, optionally containing heteroatoms belonging to groups 13-17 of the Periodic Table of the Elements; or R⁵ and R⁶, and/or R⁸ and R⁹ can optionally form a saturated or unsaturated, 5 or 6 membered rings, said ring can bear C₁-C₂₀ alkyl radicals as substituents; with the proviso that at least one of R⁶ or R⁷ is a linear or branched, saturated or unsaturated C₁-C₂₀-alkyl radical, optionally containing heteroatoms belonging to groups 13-17 of the Periodic Table of the Elements;
R³ and R⁴, equal to or different from each other, are linear or branched, saturated or unsaturated C₁-C₂₀-alkyl radicals, optionally containing heteroatoms belonging to groups 13-17 of the Periodic Table of the Elements.

9. A propylene composition comprising:
a) from 1% to 15% of the terpolymer of anyone of claims 1-7
b) from 99% to 75% of a propylene polymer comprising:
b1) from 15% to 60% by weigh, of a copolymer of propylene with C₄-C₈ alphaolefin(s) derived units, containing more than 5% by weight of said C₄-C₈ alphaolefin(s) derived units;
b2) from 40% to 85% by weigh, of a copolymer of propylene with C₄-C₈ alphaolefin(s) derived units, and optionally from 0.5% to 3% by weight of ethylene; provided that the total content of C₄-C₈ alpha-olefin(s) in the propylene polymer composition be higher than 10% by weigh.

10. The propylene composition according to claim 9 wherein in the component b) the alpha olefin is 1-butene.

11. The propylene composition according to claims 9 or 10 being in the form of film or molded object.

12. The 1-butene propylene ethylene terpolymer according to claims 1-7 being in the form of film or molded object.

## Patentansprüche

1. 1-Buten-Propylen-Ethylen-Terpolymer mit einem Gehalt an von Propylen abgeleiteten Einheiten im Bereich von 0,1-10 Gew.% und einem Gehalt an von Ethylen abgeleiteten Einheiten im Bereich von 0,1 bis 3 Gew.-%, mit den folgenden Eigenschaften:
a) Molekulargewichtsverteilung Mw/Mn, gemessen durch GPC, kleiner als 3,5;
b) Schmelzpunkt (DSC) im Bereich zwischen 60°C und 105°C;
c) Gehalt an 1-Buten-Einheiten in Form von isotaktischen Pentaden (mmmm), gemessen durch NMR, im Bereich zwischen 90% und 96%.

2. 1-Buten-Propylen-Ethylen-Terpolymer nach Anspruch 1, wobei bei Mischung mit 90% eines Propylenharzes die Siegelungsanfangstemperatur (SIT) der resultierenden Mischung mindestens 10°C niedriger ist als die Siegelungsanfangstemperatur (SIT) des Propylenharzes allein.

3. 1-Buten-Propylen-Ethylen-Terpolymer nach Anspruch 2, wobei die Siegelungsanfangstemperatur (SIT) der resultierenden Mischung mindestens 20°C niedriger ist als die Siegelungsanfangstemperatur (SIT) des Propylenharzes allein.

4. 1-Buten-Propylen-Ethylen-Terpolymer nach einem der Ansprüche 1-2, wobei bei Mischung mit 90% eines Propylenharzes die Siegelungsanfangstemperatur (SIT) der resultierenden Mischung mindestens 10°C niedriger ist als die Siegelungsanfangstemperatur (SIT) des Propylenharzes, wobei das Propylenharz eine Propylenzusammensetzung ist, die Folgendes umfasst:
i) von 15 bis 60 Gew.-% eines Copolymers von Propylen mit von C₄-C₈-α-Olefin(en) abgeleiteten Einheiten, das mehr als 5 Gew.-% der von C₄-C₈-α-Olefin(en) abgeleiteten Einheiten enthält;
ii) von 40 bis 85 Gew.-% eines Copolymers von Propylen mit C₄-C₈-α-Olefin(en), das von 10 bis 30 Gew.-% der von C₄-C₈-α-Olefin(en) abgeleiteten Einheiten enthält, und optional von 0,5 bis 3 Gew.-% Ethylen;
mit der Maßgabe, dass der Gesamtgehalt an C₄-C₈-α-Olefin(en) in der Propylenpolymerzusammensetzung höher ist als 10 Gew.-%.

5. 1-Buten-Propylen-Ethylen-Terpolymer nach einem der Ansprüche 1-4, wobei der Schmelzpunkt (gemessen durch DSC) im Bereich zwischen 65°C und 96°C liegt.

6. 1-Buten-Propylen-Ethylen-Terpolymer nach einem der Ansprüche 1-5, wobei der Gehalt an von Propylen abgeleiteten Einheiten im Bereich von 4 bis 8 Gew.-% liegt.

7. 1-Buten-Propylen-Ethylen-Terpolymer nach einem der Ansprüche 1-6, wobei der Gehalt an von Ethylen abgeleiteten Einheiten im Bereich von 0,5 bis 1,5 Gew.-% liegt.

8. Verfahren zur Herstellung des 1-Buten-Propylen-Ethylen-Terpolymers nach den Ansprüchen 1-7, wobei 1-Buten, Propylen und Ethylen unter Polymerisationsbedingungen in Gegenwart eines Katalysatorsystems miteinander in Kontakt gebracht werden, das man erhalten kann, indem Folgendes miteinander in Kontakt gebracht wird:
(A) eine stereorigide Metallocenverbindung;
(B) ein Alumoxan oder eine Verbindung, die ein Alkylmetallocen-Kation bilden kann; und optional
(C) eine aluminiumorganische Verbindung,
wobei die stereorigide Metallocenverbindung zu Formel (I) gehört 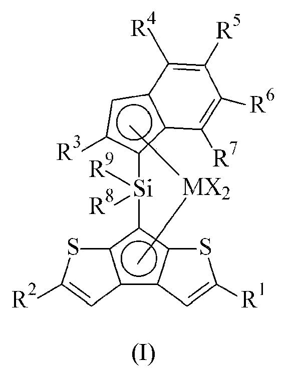 worin:
M ein Atom eines Übergangsmetalls ist, das aus jenen ausgewählt ist, die zu Gruppe 4 des Periodensystems gehören;
X, gleich oder voneinander verschieden, ein Wasserstoffatom, ein Halogenatom, eine R-, OR-, OSO₂CF₃-, OCOR-, SR-, NR₂- oder PR₂-Gruppe ist, wobei R ein linearer oder verzweigter, gesättigter oder ungesättigter C₁-C₂₀-Alkyl-, C₃-C₂₀-Cycloalkyl-, C₆-C₂₀-Aryl-, C₇-C₂₀-Alkylaryl- oder C₇-C₂₀-Arylalkylrest ist, optional mit Heteroatomen, die zu den Gruppen 13-17 des Periodensystems der Elemente gehören; oder zwei X können zu einer OR'O-Gruppe verbunden sein, wobei R' ein C₁-C₂₀-Alkyliden-, C₆-C₂₀-Aryliden-, C₇-C₂₀-Alkylaryliden-, oder C₇-C₂₀-Arylalkylidenrest ist;
R¹, R², R⁵, R⁶, R⁷, R⁸ und R⁹, gleich oder voneinander verschieden, Wasserstoffatome oder lineare oder verzweigte, gesättigte oder ungesättigte C₁-C₂₀-Alkyl-, C₃-C₂₀-Cycloalkyl-, C₆-C₂₀-Aryl-, C₇-C₂₀-Alkylaryl- oder C₇-C₂₀-Arylalkylreste sind, optional mit Heteroatomen, die zu den Gruppen 13-17 des Periodensystems der Elemente gehören; oder R⁵ und R⁶, und/oder R⁸ und R⁹ optional einen gesättigten oder ungesättigten, 5- oder 6-gliedrigen Ring bilden können, wobei der Ring C₁-C₂₀-Alkylreste als Substituenten tragen kann; mit der Maßgabe, dass mindestens eines von R⁶ oder R⁷ ein linearer oder verzweigter, gesättigter oder ungesättigter C₁-C₂₀-Alkylrest ist, optional mit Heteroatomen, die zu den Gruppen 13-17 des Periodensystems der Elemente gehören;
R³ und R⁴, gleich oder voneinander verschieden, lineare oder verzweigte, gesättigte oder ungesättigte C₁-C₂₀-Alkylreste sind, optional mit Heteroatomen, die zu den Gruppen 13-17 des Periodensystems der Elemente gehören.

9. Propylenzusammensetzung, die Folgendes umfasst:
a) von 1% bis 15 % des Terpolymers nach einem der Ansprüche 1-7
b) von 99% bis 75% eines Propylenpolymers, das Folgendes umfasst:
b1) von 15 bis 60 Gew.-% eines Copolymers von Propylen mit von C₄-C₈-α-Olefin(en) abgeleiteten Einheiten, das mehr als 5 Gew.-% der von C₄-C₈-α-Olefinen abgeleiteten Einheiten enthält;
b2) von 40 bis 85 Gew.-% eines Copolymers von Propylen mit von C₄-C₈-α-Olefin(en) abgeleiteten Einheiten, und optional von 0,5 bis 3 Gew.-% Ethylen; mit der Maßgabe, dass der Gesamtgehalt an C₄-C₈-α-Olefin(en) in der Propylenpolymerzusammensetzung höher ist als 10 Gew.-%.

10. Propylenzusammensetzung nach Anspruch 9, wobei das α-Olefin in der Komponente b) 1-Buten ist.

11. Propylenzusammensetzung nach Anspruch 9 oder 10, die in Form einer Folie oder eines Formteils vorliegt.

12. 1-Buten-Propylen-Ethylen-Terpolymer nach den Ansprüchen 1-7, das in Form einer Folie oder eines Formteils vorliegt.

## Revendications

1. Terpolymère de 1 -butène-propylène-éthylène présentant une teneur en unités dérivées du propylène se situant dans la plage de 0,1-10 % en poids et en unités dérivées de l'éthylène se situant dans la plage de 0,1 à 3 % en poids présentant les propriétés suivantes :
a) distribution des poids moléculaires Mw/Mn mesurée par CPG inférieure à 3,5 ;
b) point de fusion (DSC - calorimétrie différentielle à balayage - Differential Scanning Calorimetry) compris entre 60°C et 105°C ;
c) teneur en unités de 1-butène sous la forme de pentades isotactiques (mmmm) mesurée par RMN comprise entre 90% et 96%.

2. Terpolymère de 1-butène-propylène-éthylène selon la revendication 1, où, quand il est mélangé avec 90% d'une résine de propylène, la température d'initiation de scellage (SIT - seal initiation température) du mélange résultant est d'au moins 10°C inférieure à la température d'initiation de scellage (SIT) de la résine de propylène seule.

3. Terpolymère de 1-butène-propylène-éthylène selon la revendication 2, où la température d'initiation de scellage (SIT) du mélange résultant est d'au moins 20°C inférieure à la température d'initiation de scellage (SIT) de la résine de propylène seule.

4. Terpolymère de 1-butène-propylène-éthylène selon l'une quelconque des revendications 1-2, où, quand il est mélangé avec 90% d'une résine de propylène, la température d'initiation de scellage (SIT) du mélange résultant est d'au moins 10°C inférieure à la température d'initiation de scellage (SIT) de la résine de propylène, ladite résine de propylène étant une composition de propylène comportant :
i) 15% à 60% en poids d'un copolymère de propylène avec des unités dérivées d'alpha-oléfine(s) en C₄-C₈, contenant plus de 5% en poids desdites unités dérivées d'alpha-oléfine(s) en C₄-C₈ ;
ii) 40% à 85% en poids d'un copolymère de propylène avec une/des alpha-oléfine(s) en C₄-C₈, contenant 10% à 30% en poids desdites unités dérivées d'alpha-oléfine(s) en C₄-C₈ et éventuellement 0,5% à 3% en poids d'éthylène ;
à condition que la teneur totale en alpha-oléfine(s) en C₄-C₈ de la composition de polymère de propylène soit supérieure à 10 % en poids.

5. Terpolymère de 1-butène-propylène-éthylène selon l'une quelconque des revendications 1-4, où le point de fusion (mesuré par DSC) est compris entre 65°C et 96°C.

6. Terpolymère de 1-butène-propylène-éthylène selon l'une quelconque des revendications 1-5, où la teneur en unités dérivées du propylène se situe dans la plage de 4 à 8 % en poids.

7. Terpolymère de 1-butène-propylène-éthylène selon l'une quelconque des revendications 1-6, où la teneur en unités dérivées de l'éthylène se situe dans la plage de 0,5 à 1,5 % en poids.

8. Procédé pour la préparation du terpolymère de 1-butène-propylène-éthylène selon les revendications 1-7, où le 1-butène, le propylène et l'éthylène sont mis en contact sous des conditions de polymérisation en présence d'un système de catalyseur pouvant être obtenu en mettant en contact :
(A) un composé stéréorigide de type métallocène ;
(B) un aluminoxane ou un composé capable de former un cation de type alkylmétallocène ; et éventuellement
(C) un composé organique de l'aluminium,
où le composé stéréorigide de type métallocène appartient à la formule (I) 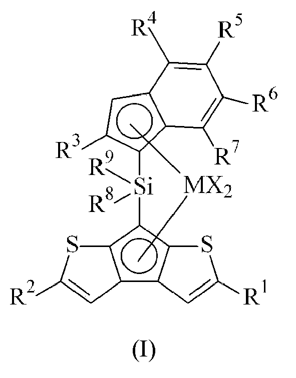 où :
M représente un atome d'un métal de transition choisi parmi ceux appartenant au groupe 4 du tableau périodique des éléments ;
X, identique ou différent l'un de l'autre, représente un atome d'hydrogène, un atome d'halogène , un groupe R, OR, OSO₂CF₃, OCOR, SR, NR₂ ou PR₂ où R représente un radical C₁-C₂₀-alkyle linéaire ou ramifié, saturé ou insaturé, C₃-C₂₀-cycloalkyle, C₆-C₂₀-aryle, C₇-C₂₀-alkylaryle ou C₇-C₂₀-arylalkyle, contenant éventuellement des hétéroatomes appartenant aux groupes 13-17 du tableau périodique des éléments ; ou deux X peuvent être liés ensemble pour former un groupe OR'O où R' représente un radical C₁-C₂₀-alkylidène, C₆-C₂₀-arylidène, C₇-C₂₀-alkylarylidène ou C₇-C₂₀-arylalkylidène ;
R¹ R², R⁵, R⁶, R⁷, R⁸ et R⁹, identiques ou différents les uns des autres, représentent des atomes d'hydrogène ou des radicaux C₁-C₂₀-alkyle linéaires ou ramifiés, saturés ou insaturés, C₃-C₂₀-cycloalkyle, C₆-C₂₀-aryle, C₇-C₂₀-alkylaryle ou C₇-C₂₀-arylalkyle, contenant éventuellement des hétéroatomes appartenant aux groupes 13-17 du tableau périodique des éléments ; ou R⁵ et R⁶ et/ou R⁸ et R⁹ peuvent éventuellement former des cycles à 5 ou 6 chaînons saturés ou insaturés, ledit cycle peut porter des radicaux C₁-C₂₀ alkyle comme substituants ; à condition qu'au moins un des groupes R⁶ ou R⁷ représente un radical C₁-C₂₀-alkyle linéaire ou ramifié, saturé ou insaturé, contenant éventuellement des hétéroatomes appartenant aux groupes 13-17 du tableau périodique des éléments ;
R³ et R⁴, identiques ou différents l'un de l'autre, représentent des radicaux C₁-C₂₀-alkyle linéaires ou ramifiés, saturés ou insaturés, contenant éventuellement des hétéroatomes appartenant aux groupes 13-17 du tableau périodique des éléments.

9. Composition de propylène comportant :
a) 1% à 15% du terpolymère selon l'une quelconque des revendications 1-7
b) 99% à 75% d'un polymère de propylène comportant :
b1) 15% à 60% en poids d'un copolymère de propylène avec des unités dérivées d'alpha-oléfine(s) en C₄-C₈, contenant plus de 5% en poids desdites unités dérivées d'alpha-oléfine(s) en C₄-C₈ ;
b2) 40% à 85% en poids d'un copolymère de propylène avec des unités dérivées d'alpha-oléfine(s) en C₄-C₈ et éventuellement 0,5% à 3% en poids d'éthylène ;
à condition que la teneur totale en alpha-oléfine(s) en C₄-C₈ de la composition de polymère de propylène soit supérieure à 10 % en poids.

10. Composition de propylène selon la revendication 9, où, dans le composant b) l'alpha-oléfine est le 1 -butène.

11. Composition de propylène selon les revendications 9 ou 10 se trouvant sous la forme de film ou d'objet moulé.

12. Terpolymère de 1-butène-propylène-éthylène selon les revendications 1-7 se trouvant sous la forme de film ou d'objet moulé.
